# EUROPEAN PATENT APPLICATION

(11) **EP 1 044 622 A1**
(43) Date of publication of application: **18.10.2000**
(21) Application number: 99830213.7
(22) Date of filing: 14.04.1999
(51) Int. Cl.: A43D 3/00, B23Q 39/00, B27M 3/20

(54) **Automatic machine for finishing forms for shoe manufacturing starting from rough-shaped forms**

(71) Applicant: Palser Officina Meccanica s.n.c. di Palmeri Salvatore e Serra Maria Paola, 21030 Mesenzana (IT)
(72) Inventor: Palmeri, Salvatore, 21010 Germignaga (IT)
(74) Representative: Pellegri, Alberto

(57) **Abstract**

A modelling and finishing machine for shoe forms comprising a rotating drive head (1) and a tailpin (2), a milling head (5) operable for modelling and finishing the external surface of the form, a first clamp (8) to clamp the form between the base of the heel and the rim of the neck; a second clamp (10) to clamp the form sideways at a distal position from the forefoot thereof; a second milling head with a cutting orientation substantially orthogonal to that of said first milling head and means for back off the sledges of the rotating drive head and of the tailpin disengaging them from the form at the end of the modelling, blocking the form in the same spatial position by means of said pair of mutually orthogonal clamps. At this point, the seam-like rearmost appendix is removed by the second milling head and the toe-like foremost appendix is removed by the first milling head.

## Description

The present invention relates to a process and to an automatic machine for manufacturing forms for the production of shoes.

The rough-shaped form, either articulated or not, must be finished such to define an external form that reproduces in volumetric terms, the particular shoe model.

In order to increase the productivity, the finishing process is commonly carried out on dedicated numerical control or copying machines which can often work simultaneously one or more pairs of forms.

Typically, each form being processed is held between a rotating drive head and a coaxial tailpin that are conventionally mounted on respective slides, at least one of which is slid forward or backward to clamp or release the form.

Each form is machined by rotating it through the rotating drive. Commonly, the left and right forms are machined simultaneously in a pair of working stations of the machine. The tool is a mill that moves alternately along an axis that is substantially orthogonal to the axis of rotation of the form, so that the combination of the respective rotating and linear movements tracks a certain outline that coincides with the perimeter of a cross-section of the shoe model.

The mill advances in a continuous or incremental mode along a line parallel to the axis of rotation of the form varying its alternate motion orthogonal to the rotating axis of the form such to track the corresponding cross-sectional perimeter of the three-dimensional model.

The drive head fits into cavities present on the rearmost face of a seam that extends along the rear of the rough-shaped form from the base of the heel to the neck of the form.

The tailpin fits on the front face of a toe-like appendix that extends from the base of the forefoot of the rough-shaped form.

The known milling currently being used execute the finishing process, thoroughly modelling the rough-shaped form according to the particular model, leaving the seam and the toe-like appendix of the form.

Obviously, these two working appendices must be eliminated and this final operation is usually carried out manually, or in some cases by transferring the form to a semiautomatic or manually controlled milling machine.

However, it may still be necessary to ultimate the finishing by filling off residual slight discontinuities.

Apart from productivity reasons, the removing of the two appendices from the finished form demands additional handling of the form and the use of manual tools increases the risks of accidents.

A main aim of the present invention is to provide for the completion of the finishing of the forms on the same machine without requiring any further handling of the forms or manual finishing operations.

Another objective of the invention is to make possible at completion of the finishing with equipments and devices that may be easily installed on an existing milling machine making able to complete the finishing operations with the removing the appendices left at the end of the milling process.

These important results are obtained by installing on a conventional finishing machine a pair of holding and spatially blocking clamps the form at the end of the conventional milling process. The clamps allow the disengagement and retraction of the drive head and optionally also the tailpin that hold the form during the conventional milling process.

The clamps act in a mutually orthogonal way. A first clamp blocks the form at the base of the heel and at the neck of the form. The other clamp blocks the form on its lateral faces, at a distal position in respect to the forefoot of the form.

Preferably, the two jaws of the second clamp that blocks the form sideways are slightly divergent, while the two jaws of the first clamp are misaligned such to produce a torque that pushes the form between the two diverging jaws of the second clamp.

By immobilizing the form essentially in the same spatial position where it was held by the rotating drive head and the tailpin, these devices of the machine may be released and moved away from the form, thus allowing for the elimination of the toe-like foremost appendix by the same mill that has performed the finishing of the form.

The rearmost seam-like appendix is removed by a second auxiliary mill, purposely installed on the machine, the cutting orientation of which is substantially orthogonal to that of the main or primary mill of the machine.

These additional devices may be readily installed on an existing machine, thus permitting an economical retrofitting.

A form mounted on the so equipped finishing machine of the invention may be thoroughly milled, including final steps for the removal of the foremost toe-like appendix and of the rearmost seam-like appendix, before being discharged from the finishing machine.

The spatial blocking of the milled form, the disengaging and retracting of the drive head and of the tailpin, as well as the successive milling of the working, toe-like appendix of the forefoot by same mill of the machine that does the milling of the form and the simultaneous intervention of the second auxiliary mill to remove the seam-like appendix from the rear of the form are all automatically driven operations.

The different aspects and advantages of the invention will be even more evident through the following description of an embodiment and by referring to the attached figures wherein:
**Figures 1a** and **1b** show a rough-shaped form and a milled form, before removing the working appendices;
**Figure 2** shows the finished form, after having removed the working appendices;
**Figure 3** is a simplified plan view of a milling machine for finishing shoe forms realized according to the present invention, incorporating the additional devices for the removal of the working appendices;
**Figure 4** is a simplified plan view of the same machine of Fig. 3 during the final phase of removal of the appendices;
**Figures 5a** and **5b** are vertical views that detail the system of spatial blocking of the form by a pair of clamps operating in a mutually orthogonal way, according to the present invention;
**Figure 6** is a vertical view of a machine of the invention equipped to work simultaneously on two pairs of forms;
**Figure 7** is a vertical view orthogonal to the view of Fig. 6.

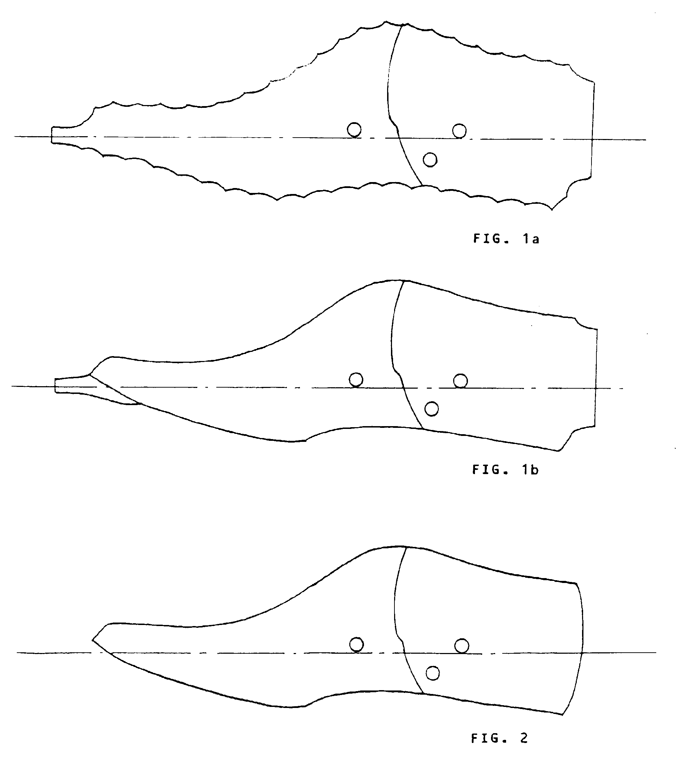

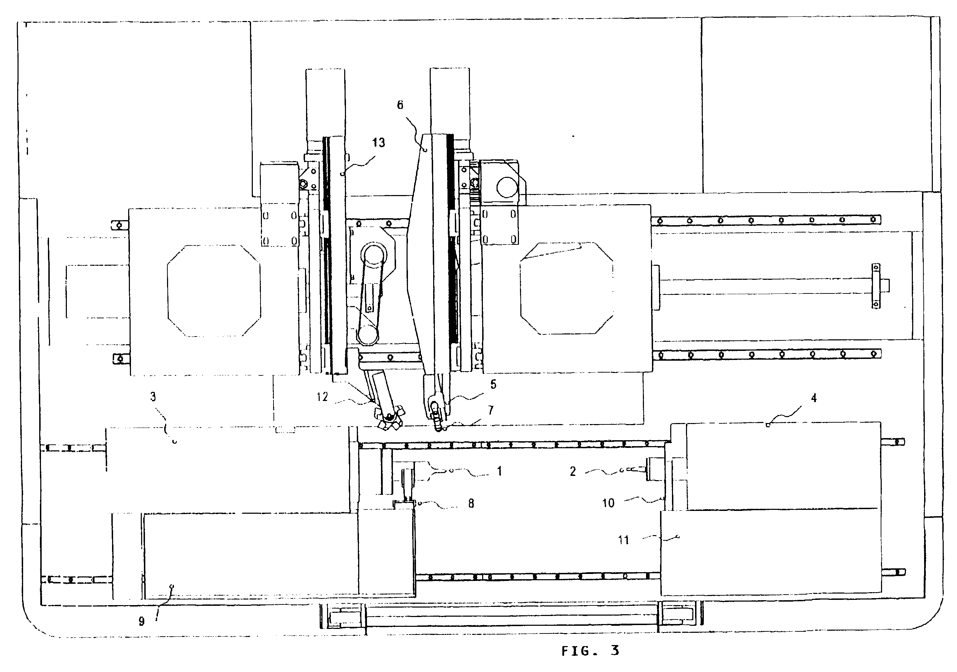

Figures 1a, 1b and 2 show an articulated form for the production of a certain model and size of shoes, in a rough-shaped state, at the end of a normal finishing process on an automatic milling machine, and after the removal of the working appendices, represented by the seam-like rearmost appendix C and by the foremost, toe-like appendix P.

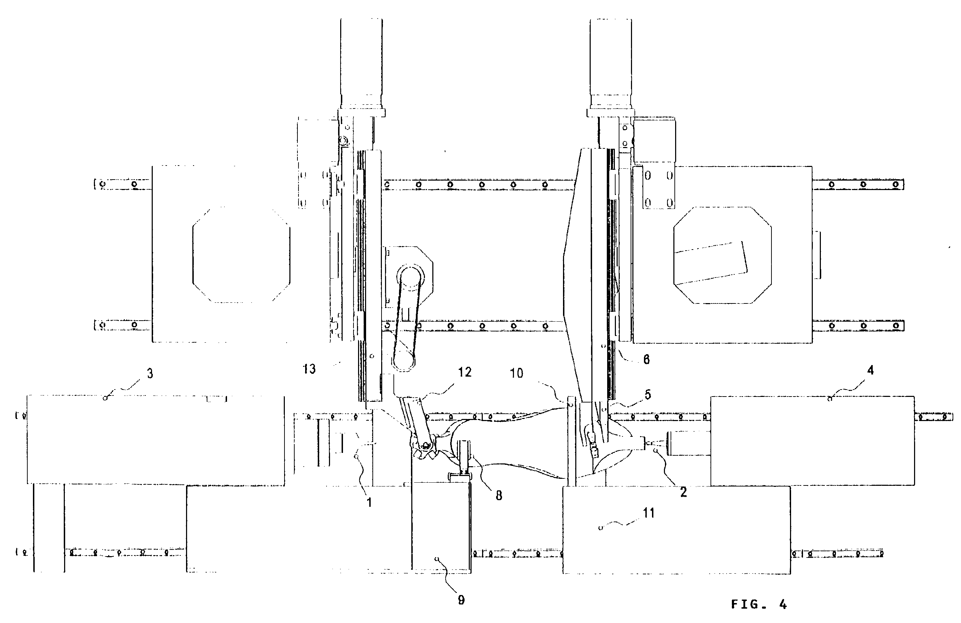

Fig. 3 is plan view of a finishing machine modified according to the present invention and capable of completely finish the form by removing the two working appendices C and P without any handling of the form.

As will be readily recognized by the skilled person, the machine comprises a rotating drive head 1 and a tailpin 2, coaxially mounted on respective sledges 3 and 4, which are driven forward and backward to block or release a form. The rotating drive head 1 comprises drive means for rotating the head plugged in dedicated cavities present on the end face of the seam-like appendix C of the form. driving the form while the milling head 5. whose linear movement is numerically controlled by dedicated actuators installed in the mill carriage, indicated as a whole with 6 in the figure.

During each mill run, the alternate translating motion, orthogonal to the rotating axis of the form, of the rotating mill 7, defines a curve lying on a cross-section plane that coincides with the cross-section profile of the form's model.

The mill 7 advances along the horizontal axis (longitudinal axis of the form) coordinately altering the arched curve described in conjunction with the rotation of the form and through one or more runs, the surface of the form is to coincide with the pre-established three-dimensional model.

According to an essential aspect of the present invention, the machine is equipped with a first clamp 8, mounted on a sledge 9, moving along a parallel axis to that of the sledge 3 of the rotating drive head 1 of the machine and with a second clamp 10, the clamping direction of the jaws of which is orthogonal to the clamping direction of the jaws of the first clamp 8. The second clamp 10 is mounted on a sledge 11, parallely shiftable in respect to the sledge 4 of the tailpin 2.

Moreover, the machine is equipped with a second or auxiliary milling head 12, the cutting orientation of which is substantially orthogonal to that of the first or main milling head 5. The second milling head 12 is controlled by a respective conventional control carriage, indicated as a whole with 13 in the figure, similar to the carriage 6 of the first or main milling head 5 of the machine.

Upon terminating the modelling milling by the mill 5 of the form held between the rotating drive head 1 and the tailpin 2, the two orthogonally acting clamps 8 and 10, from their rest position, backed off the rotating drive head and the tailpin. respectively, are advanced toward the form and commanded to simultaneously vising the form between the base of the heel and the rim of the neck with the clamp 8 and between the two sides of the form, commonly at a distal position, that is sufficiently backward of the forefoot portion.

The combined action of the two clamps is that of blocking the form in the precise spatial position that it had during the milling, while the form is still being held in position by the rotating drive head 1 and by the tailpin 2.

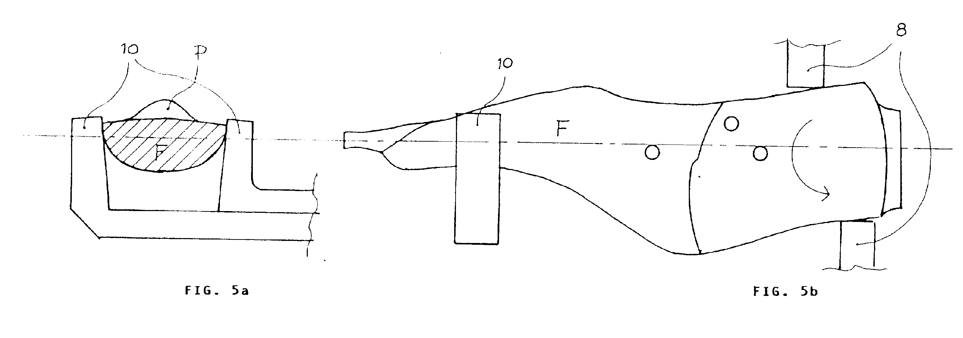

According to a particularly effective and preferred embodiment, the clamp 10 has slightly divergent jaws (with an angle that may generally be between 1 and 5 or more degrees), as schematically shown in Fig. 5a.

By contrast, the clamp 8 whose clamping orientation is orthogonal to that of clamp 10, has its jaws that are purposely offset, as schematically illustrated in Fig. 5b, such to produce a torque that pushes the form between the diverging jaws of the clamp 10.

This mutually coordinated action of two clamps is exceptionally effective to ensure a firm hold of the form despite of the variety of sizes and shapes that may have the forms and which would make difficult to ensure a firm hold of the form in any condition.

Once the form is blocked by the pair of clamps 8 and 10, the sledges 3 and 4 of the rotating drive head 1 and of the tailpin 2, respectively, may be backed off, disengaging the drive head 1 and the tailpin 2 from the seam-like appendix C and from the appendix P of the foremost part of the form.

Thereafter, the auxiliary milling head 12 is driven by the control carriage 13 to remove through successive runs, the seam-like rear appendix C. Simultaneously, also the main milling head 5 of the machine is driven to eliminate the front appendix P.

In case of sufficiently long toe-like front appendix P, it is possible to maintain the tailpin 2 engaged in the cavity on the terminal face of the appendix, as long as it does not interfere with the advancement of the milling head 5, practically until a complete separation of the form from the appendix residues occurs. These finishing steps for the removal of the appendices C and P are depicted in the plan view of Fig. 4.

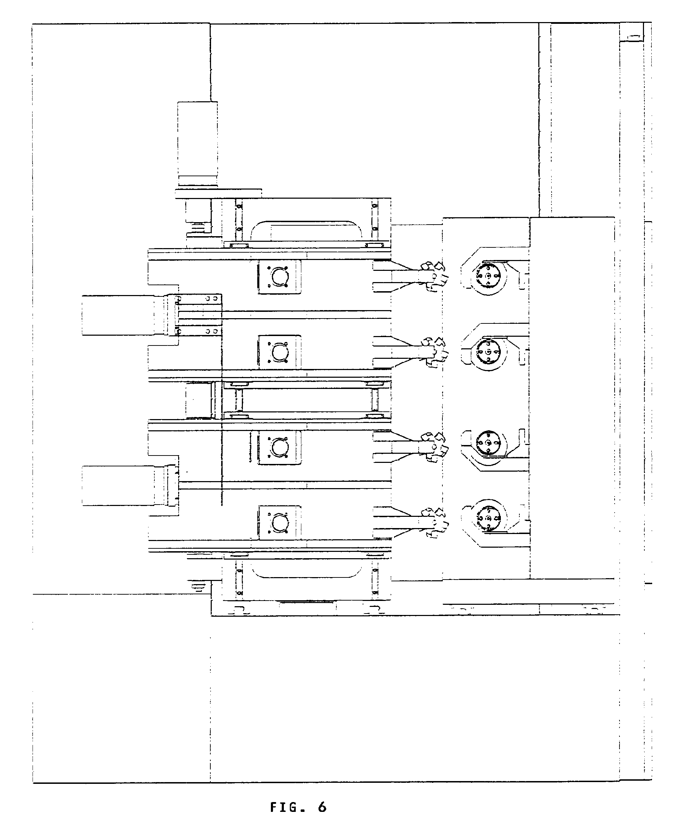

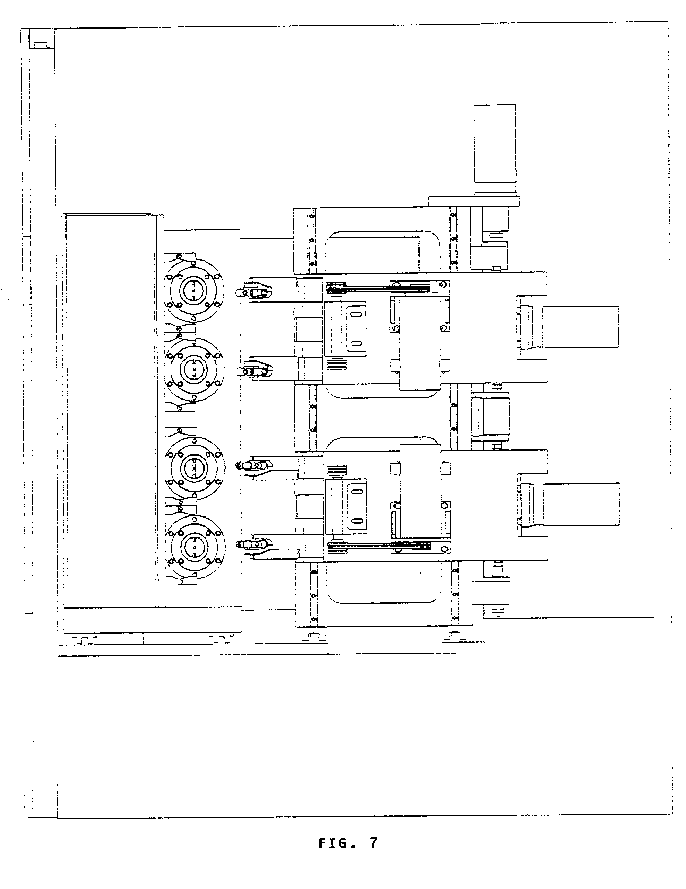

Of course, the installation of the auxiliary devices for the finishing step of eliminating the seam-like rear appendix C and the toe-like front appendix P left by the conventional milling phase for modelling the form, may be carried out in a modular manner, even on multiple stations finishing machinery, where multiple drive heads and tailpin are present on the same machine to process one or more pairs of forms at one time, as in the two, mutually orthogonal, Figures 6 and 7 of a machine capable of processing two pairs of forms at one time.

As indicated in Fig. 6, each of the four vertically disposed work stations, are equipped, according to the present invention, with as many pairs of blocking clamps and with as many auxiliary milling heads working orthogonally to the respective main milling heads of the machine.

## Claims

1. Modelling and finishing machine for shoe forms comprising at least a rotating drive head and a tailpin, mounted coaxially on respective sledges driven forward and/or backward to hold or release a form, and at least a milling head operable for modelling and finishing the external surface of the form, rotated by said drive head engaged in dedicated cavities present on the rearmost surface of a seam-like appendix extending from the base of the heel to the rim of the neck of the form, the tailpin engaging in a cavity on the foremost surface of a toe-like appendix extending from the base of the forefoot of the form, characterized in that it further comprises
at least a first clamp mounted on a sledge shiftable parallel to the sledge carrying said rotating drive head and movable toward the form to clamp the form between the base of the heel and the rim of the neck;
at least a second clamp mounted on a sledge shiftable parallel to the sledge of the tailpin and movable toward the form to clamp the form sideways at a distal position from the forefoot thereof;
at least a second milling head with a cutting orientation substantially orthogonal to that of said first milling head;
means for back off the sledges of said rotating drive head and of said tailpin disengaging them from the form at the end of the modelling of the form by said first milling head and after blocking the form in the same spatial position by means of said pair of mutually orthogonal clamps;
said seam-like rearmost appendix being removed by said second milling head and said toe-like foremost appendix being removed by said first milling head.

2. The machine according to the claim 1, characterized in that the jaws of said second clamp are divergent and the two jaws of said first clamp acting on offset points exerting a torque that pushes the form into abutment with the diverging jaws of the second clamp.

3. The machine according to claim 1, characterized in that the removal of said toe-like appendix by said first milling head is done while maintaining said tailpin engaged with the foremost surface of the appendix until separation occurs.
